# EUROPEAN PATENT APPLICATION

(11) **EP 2 869 193 A1**
(43) Date of publication of application: **06.05.2015**
(21) Application number: 14191839.1
(22) Date of filing: 05.11.2014
(51) Int. Cl.: G06F 9/445

(54) **Method for providing auto-run service and electronic device thereof**

(30) Priority: 05.11.2013 KR 20130133779
(71) Applicant: Samsung Electronics Co., Ltd, Gyeonggi-do 443-742 (KR)
(72) Inventor: Han, Seung-Wok, Seoul (KR); Roh, Dong-Hyun, Gyeonggi-do (KR); Kim, Tae-Kyung, Seoul (KR); Min, Kyung-Sub, Gyeonggi-do (KR)
(74) Representative: Gover, Richard Paul

(57) **Abstract**

A method for providing an auto-run service in an electronic device includes identifying state information on the electronic device, performing a first function mapped to the state information on the electronic device based on the state information on the electronic device, determining an event characteristic for the first function, and re-performing the first function when an event corresponding to the event characteristic occurs. Other embodiments including an electronic device for providing an auto-run service are also disclosed.

## Description

### TECHNICAL FIELD

Various embodiments of the present disclosure relates generally to a method and an electronic device for providing an auto-run service.

### BACKGROUND

With the development of information communication and semiconductor technologies, various electronic devices have developed into multimedia devices that provide various multimedia services. For example, electronic devices may provide various multimedia services such as broadcasting services, wireless internet services, camera services and music play services.

A user of an electronic device needs more various services because the electronic device provides multimedia services. Accordingly, the electronic device needs services for satisfying user's various desires.

### SUMMARY

To address the above-discussed deficiencies, it is a primary object to provide a device and method for providing an auto-run service on an electronic device.

Another aspect of the present disclosure is to provide a device and method for setting a condition for an auto-run service on an electronic device.

Another aspect of the present disclosure is to provide a device and method for setting a condition for an auto-run service based on the number of times performing services on an electronic device.

Another aspect of the present disclosure is to provide a device and method for providing an auto-run service based on a plurality of conditions on an electronic device.

Another aspect of the present disclosure is to provide a device and method for automatically generating additional setting information on an auto-run service based on setting information on a preset auto-run service on an electronic device.

According to an aspect of the present disclosure, a method of operating an electronic device includes identifying state information of the electronic device, performing a first function mapped to the identified state information, generating an event characteristic for the first function; and re-performing the first function when an event corresponding to the generated event characteristic is occurred.

According to another aspect of the present disclosure, an electronic device includes a memory; and a processor configured to identify state information of the electronic device, to perform a first function mapped to the identified state information, to generate an event characteristic for the first function, and to re-perform the first function when an event corresponding to the generated event characteristic is occurred.

Other aspects, advantages, and salient features of the disclosure will become apparent to those skilled in the art from the following detailed description, which, taken in conjunction with the annexed drawings, discloses exemplary embodiments of the disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a block diagram of an electronic device according to an embodiment of the present disclosure;
FIG. 2 is a detailed block diagram of a processor according to an embodiment of the present disclosure;
FIG. 3 shows a procedure for generating setting information on an auto-run service by an electronic device according to an embodiment of the present disclosure;
FIG. 4 shows a procedure for updating setting information on an auto-run service by an electronic device according to an embodiment of the present disclosure;
FIG. 5 shows a procedure for automatically generating setting information on an auto-run service by an electronic device according to an embodiment of the present disclosure;
FIG. 6 shows a procedure for generating setting information on an auto-run service by an electronic device according to another embodiment of the present disclosure;
FIG. 7 shows a procedure for generating setting information on an auto-run service by an electronic device according to still another embodiment of the present disclosure;
FIG. 8 shows a procedure for providing an auto-run service by an electronic device according to an embodiment of the present disclosure;
FIG. 9 shows a procedure for further providing an auto-run service by an electronic device according to an embodiment of the present disclosure;
FIG. 10 shows a detailed procedure for providing an additional auto-run service by an electronic device according to an embodiment of the present disclosure;
FIG. 11 shows a detailed procedure for providing an additional auto-run service by an electronic device according to another embodiment of the present disclosure;
FIGS. 12A to 12B show a configuration screen for an auto-run service on an electronic device according to an embodiment of the present disclosure;
FIGS. 13A to 13B show auto-run service screens on an electronic device according to an embodiment of the present disclosure; and
FIGS. 14A to 14B show auto-run service screens on an electronic device according to an embodiment of the present disclosure.

### DETAILED DESCRIPTION

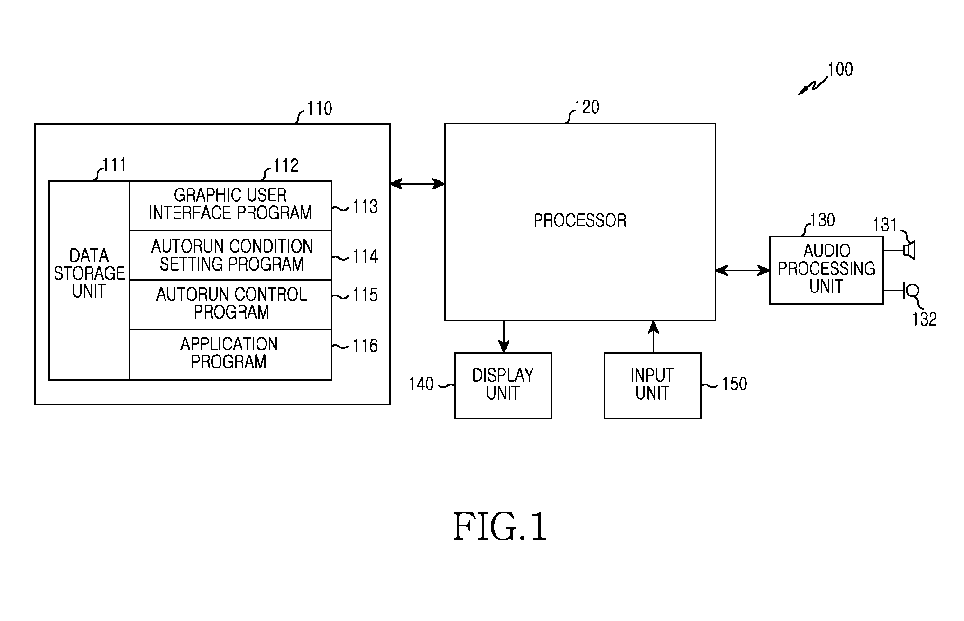

FIGURES 1 through 14B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device disclosure. The following description with reference to the accompanying drawings is provided to assist in a comprehensive understanding of exemplary embodiments of the disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of exemplary embodiments of the present disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

In the following, the embodiments of the present disclosure describe techniques for providing an auto-run service on an electronic device. An auto-run service can be a software program for a virtual assistant that provides various advices to a user depending on the circumstances or situations, including a time, a place, and weather.

The electronic device according to the present disclosure may be one or a combination of various devices, such as a smart phone, a tablet personal computer (tablet PC), a mobile phone, a video phone, an e-book reader, a desktop PC, a laptop PC, a netbook computer, a personal digital assistant (PDA), a portable multimedia player (PMP), an MP3 player, a mobile medical device, an accessory, an electronic appcessory, a camera, a wearable device, an electronic clock, a wrist watch, a refrigerator, an air conditioner, a cleaner, an artificial intelligence robot, a TV, a digital video disk (DVD) player, an audio, an oven, a microwave, a washing machine, an electronic bracelet, an electronic necklace, an air cleaner, an electronic frame, a medical device (for example, an magnetic resonance angiography (MRA) device, an magnetic resonance imaging (MRI) device, a computed tomography (CT) device, an imaging device, or an ultrasonicator), a navigation device, a global positioning system (GPS) receiver, an event data recorder (EDR), a flight data recorder (FDR), a set-top box, a TV box (for example, SAMSUNG HomeSync™, Apple TV™, or Google TV™), an electronic dictionary, a car infotainment device, electronic equipment for ship, such as a navigation device for ship, or a gyrocompass), avionics, a security device, an electronic clothing, an electronic key, a camcorder, game consoles, a head-mounted display (HMD), a flat panel display device, an electronic album, furniture or a portion of building/structure including an electronic device, an electronic board, an electronic signature receiving device or a projector. It is obvious to a person skilled in the art that the electronic device according to the present disclosure is not limited to the above-described devices.

An auto-run service according to an embodiment of the present disclosure may include a service that automatically performs one or more of the function of setting the control function of an electronic device, the function of executing an application program and the function of displaying state information based on state information on the electronic device and setting information on the auto-run service. In this example, the state information on the electronic device may include one or more of motion information on the electronic device, location information on the electronic device, information on the weather around the electronic device, information on an access of the electronic device to a communication network, and signal reception information on the electronic device. The setting information on the auto-run service may include event information and state information for performing the auto-run service.

FIG. 1 is a block diagram of an electronic device according to an embodiment of the present disclosure.

Referring to FIG. 1, an electronic device 100 may include a memory 110, a processor unit 120, an audio processing unit 130, a display unit 140, and an input device 150. In this example, at least one of the memory 110 or the processor 120 may be in plurality.

The memory 110 may include a data storage unit 111 that stores data generated by the operation of the electronic device 100, and a program storage unit 112 that stores one or more programs for controlling the operations of the electronic device 100.

The data storage unit 111 may store setting information for an auto-run service set through an auto-run condition setting program 114, information on the state of the electronic device 100 collected through the processor 120, setting information for an auto-run service and information on the state of the electronic device 100. For example, when storing information on the state of the electronic device 100, the data storage unit 111 may divide the information on the state of the electronic device 100 into event information for an autorun service and state information for an auto-run service and store it. For example, the data storage unit 111 may differently set the storage periods of the event information for the autorun service for the auto-run service and the state information for the auto-run service based on a period utilized to perform the auto-run service by an auto-run control program 115. In this example, the event information may represent information on the state change of the electronic device 100.

The program storage unit 112 may include a graphic user interface (GUI) program 113, the auto-run condition setting program 114, the auto-run control program 115, and at least one application program 116.

In this example, the programs included in the program storage unit 112 indicate a set of instructions and may be represented by an instruction set. The GUI program 113 may include at least one software component for providing the display unit 140 with a graphic user interface. For example, the GUI program 113 may control the display unit 140 so that information on an application program executed by the processor 120 is displayed on the display unit 150. For example, the GUI program 113 may display, on the display unit 140, a service screen for creating a setting condition for an auto-run service through the auto-run condition setting program 114. The GUI program 113 may display, on the display unit, information on an auto-run service executed through the auto-run control program 115.

The auto-run condition setting program 114 may include at least one software component for generating setting information that may provide an auto-run service through the auto-run control program 115.

For example, the auto-run condition setting program 114 may generate setting information for an auto-run service based on input information sensed through the input unit 150. For example, when it is sensed that an auto-run setting event has occurred, the auto-run condition setting program 114 may display, on the display unit 140, an auto-run condition setting screen through the GUI program 113. Then, the auto-run condition setting program 114 may use the input unit 150 to sense input information input through the auto-run condition setting screen and generate setting information for an auto-run service.

As another example, the auto-run condition setting program 114 may select setting information for an auto-run service from a list of functions, a list of events and a list of states that may be set as the auto-run service, based on input information sensed through the input unit 150. For example, when it is sensed that an auto-run setting event has occurred, the auto-run condition setting program 114 may display, on the display unit 140, a list of functions, a list of events and a list of states that may be set as the auto-run service through the GUI program 113. Then, the auto-run condition setting program 114 may select setting information for the autorun service from the list of functions, the list of events and the list of states that are displayed on the display unit 140, based on input information sensed through the input unit 150.

As still another example, the autorun condition setting program 114 may generate setting information for an autorun service corresponding to the state change of the electronic device 100 based on setting information for a preset auto-run service. For example, when a continuous run menu for a first automated function service performed through the autorun control program 115 is set, the auto-run condition setting program 114 may generate additional setting information on the first automated function service based on setting information on the first automated function service.

As still another example, when a first function is repetitively performed on the electronic device 100 having the same state, the auto-run condition setting program 114 may generate setting information for providing an auto-run service for the first function based on state information on the electronic device 100 on which the first function is performed. For example, when a first function is repetitively performed a reference number of times or more on the electronic device 100 having the same state, the auto-run condition setting program 114 may set, state information on the electronic device 100 on which the first function is performed, as reference state information for automatically performing the first function.

As another example, the auto-run condition setting program 114 may use auto-run condition information provided from a server or an opposite electronic device to generate setting information on an auto-run service. In this case, the auto-run condition setting program 114 may receive, from the server or the opposite electronic device, the auto-run condition information in the form of a message including an auto-run condition package or one or more pieces of auto-run condition information that includes pieces of auto-run condition information.

The auto-run condition setting program 114 may also update setting information for a preset auto-run service based on input information sensed through the input unit 150.

The auto-run control program 115 may include at least one software component that uses state information on the electronic device 100 to provide an auto-run service. For example, when the state change of the electronic device 100 set as an event for an auto-run service is sensed, the auto-run control program 115 may compare the current state of the electronic device 100 with state information on the auto-run service. If the current state of the electronic device 100 is included in state information for the auto-run service, the autorun control program 115 may enable a function set in the auto-run service to be performed.

The application program 116 may include a software component for at least one application program that is installed in the electronic apparatus 100.

The processor 120 may use at least one program stored in the memory 110 to enable the electronic device 100 to provide various multimedia services. For example, the processor 120 may execute the auto-run condition setting program 114 stored in the program storage unit 112 to generate or update setting information that may provide an auto-run service. Also, the processor 120 may execute the auto-run control program 115 stored in the program storage unit 112 to provide the auto-run service.

The audio processing unit 130 may provide an audio interface between a user and the electronic device 100 through a speaker 131 and a microphone 132.

The display unit 140 may display state information on the electronic device 100, user-input texts, moving pictures or still pictures. For example, the display unit 140 displays information on an application program executed by the processor 120. For example, the display unit 140 may display a service screen for creating a setting condition for an auto-run service according to the control of the processor 120 that executes the GUI program 113. Also, the display unit 140 may display information on the auto-run service executed by the processor 120.

The input unit may provide the processor 120 with input data generated by user's selection. For example, the input device 150 may include one or more of a key pad including at least one hardware button and a touch pad sensing touch information.

Although not shown, the electronic device 100 may further include one or more of a communication system, a location estimating unit and a sensor unit.

The communication system may perform at least one of the voice and data communication functions of the electronic device 100. For example, the communication system may support a short-range communication protocol (such as wireless fidelity (WiFi), Bluetooth, or near field communication (NFC)) or network communication (such as Internet, a local area network (LAN), a wire area network (WAN), a telecommunication network, a cellular network, a satellite network or a plain old telephone service (POTS).

The sensor unit may measure a physical quantity, sense the operation state of the electronic device 100 and convert measured or sensed information into an electrical signal. For example, the sensor unit may include one or more of a gesture sensor, a gyro sensor, an atmospheric sensor, a magnetic sensor, an acceleration sensor, a grip sensor, a proximity sensor, a red/green/blue (RGB) sensor, a bio sensor, a temperature/humidity sensor, an illumination sensor, an ultraviolet (UV) sensor, an E-nose sensor, an electromyography (EMG) sensor, an electroencephalogram (EEG) sensor, an electrocardiogram (ECG) sensor, and a fingerprint sensor. In this case, the sensor unit may further include a control circuit for controlling one or more sensors that are included in the sensor unit.

The location estimating unit may estimate the location of the electronic device 100. For example, the location estimating unit may estimate, the location of the electronic device 100 through a satellite signal provided from a satellite, based on a global navigation satellite system (GNSS). As another example, the location estimating unit may also estimate the location of the electronic device 100 by using at least one neighboring base station.

In the above-described embodiment, the processor 120 may execute software components stored in the program storage unit 112 in one module to set and perform an auto-run service.

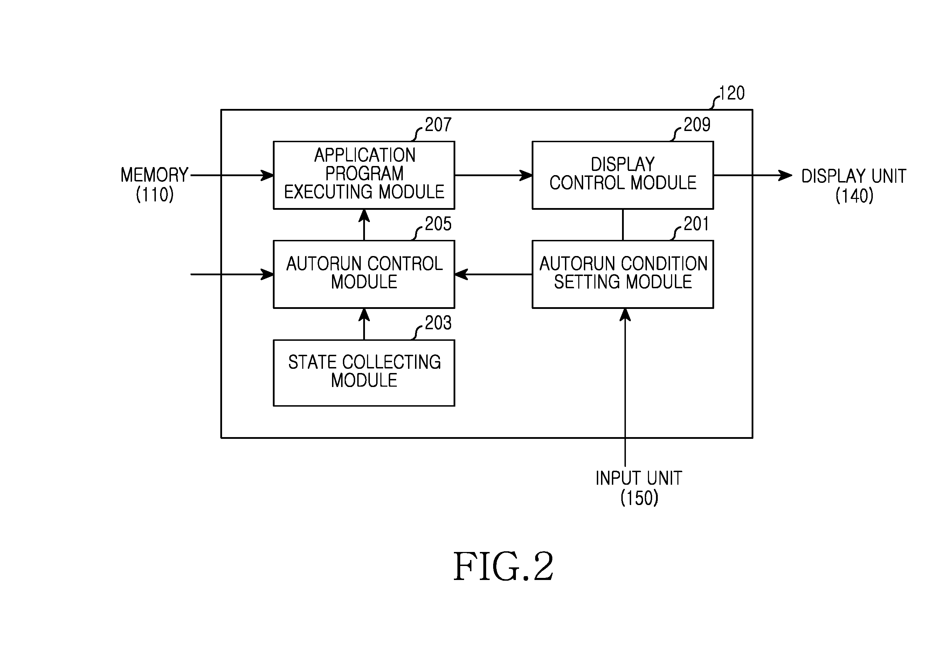

In another embodiment, the processor 120 may be configured to include components for setting and performing the auto-run service as separate modules, as shown in FIG. 2 to be described below.

FIG. 2 is a detailed block diagram of a processor according to an embodiment of the present disclosure.

Referring to FIG. 2, the processor 120 may include an auto-run condition setting module 201, a state collecting module 203, an auto-run control module 205, an application program executing module 207, and a display control module 209.

The auto-run condition setting module 201 may generate setting information for determining a time to perform the auto-run service by the auto-run control module 205. In this case, the auto-run condition setting module 201 may execute the auto-run condition setting program 114 stored in the program storage unit 112 to generate setting information for determining a time to perform the auto-run service by the auto-run control module 205.

For example, the auto-run condition setting module 201 may generate setting information for an auto-run service based on input information sensed through the input unit 150. For example, when it is sensed that an auto-run setting event has occurred, the auto-run condition setting module 201 may display, on the display unit 140, an auto-run condition setting screen through the display control module 209. Then, the auto-run condition setting module 201 may use the input unit 150 to sense input information input through the autorun condition setting screen and generate setting information for an auto-run service.

As another example, the auto-run condition setting module 201 may select setting information for an auto-run service from a list of functions, a list of events and a list of states that may be set as the auto-run service, based on input information sensed through the input unit 150. For example, when it is sensed that an auto-run setting event has occurred, the auto-run condition setting program 114 may display, on the display unit 140, a list of functions, a list of events and a list of states that may be set as the auto-run service through the display control module 209. Then, the auto-run condition setting module 201 may select setting information for the auto-run service from the list of functions, the list of events and the list of states that are displayed on the display unit 140, based on input information sensed through the input unit 150.

As still another example, the auto-run condition setting module 201 may generate setting information for an auto-run service corresponding to the state change of the electronic device 100 based on setting information for a preset auto-run service. For example, when a continuous run menu for a first automated function service performed through the auto-run control module 205 is set, the auto-run condition setting module 201 may generate additional setting information on the first automated function service based on setting information on the first automated function service. As still another example, when a first function is repetitively performed on the electronic device 100 having the same state, the auto-run condition setting module 201 may generate setting information for providing an auto-run service for the first function based on state information on the electronic device 100 on which the first function is performed. For example, when a first function is repetitively performed a reference number of times or more on the electronic device 100 having the same state, the auto-run condition setting module 201 may set, state information on the electronic device 100 on which the first function is performed, as reference state information for automatically performing the first function.

As another example, the auto-run condition setting module 201 may use auto-run condition information provided from a server or an opposite electronic device to generate setting information on an auto-run service. In this case, the auto-run condition setting module 201 may receive, from the server or the opposite electronic device, the auto-run condition information in the form of a message including an auto-run condition package or one or more pieces of auto-run condition information that include pieces of auto-run condition information.

The auto-run condition setting module 201 may also update setting information for a preset auto-run service based on input information sensed through the input unit 150.

The state collecting module 203 may collect state information on the electronic device 100. In this case, the state collecting module 203 may collect state information on the electronic device 100 through the hardware system, software system and web-based system of the electronic device 100. For example, the state collecting module 203 may collect one or more of motion information on the electronic device 100 and information on the weather around the electronic device 100 through the sensor unit. As another example, the state collecting module 203 may collect location information on the electronic device 100 through a location estimating unit. As still another example, the state collecting module 203 may also collect one or more of information on the weather around the electronic device, information on an access of the electronic device to a communication network, and signal reception information on the electronic device through a communication system.

The auto-run control module 205 may use the state information on the electronic device 100 collected through the state collecting module 203 to provide an auto-run service. In this case, the auto-run control module 205 may execute the auto-run control program 115 stored in the program storage unit 112 to provide the auto-run service. For example, when the state change of the electronic device 100 set as an event for an auto-run service is sensed, the auto-run control module 205 may compare the current state of the electronic device 100 with the state information on the auto-run service. If the current state of the electronic device 100 is included in state information on the auto-run service, the auto-run control module 205 may enable a function set in the auto-run service to be performed.

The application program executing module 207 may execute at least one application program 116 stored in the program storage unit 112 to provide a service corresponding to that application. For example, the application program executing module 207 may execute an application program corresponding to a function to be automatically performed according to the control of the auto-run control module 205.

In some embodiments, the above various functional modules can be implemented into a processor, or a processing circuitry.

The display control module 209 may provide the display unit 140 with a graphic user interface. In this case, the display control module 209 may execute the GUI program 113 stored in the program storage unit 112 to provide the display unit 140 with a graphic user interface. For example, the display control unit 220 may display, on the display unit 140, a service screen for creating a setting condition for an auto-run service through the auto-run condition setting module 201. The display control module 209 may display, on the display unit, information on an auto-run service executed through the auto-run control module 205.

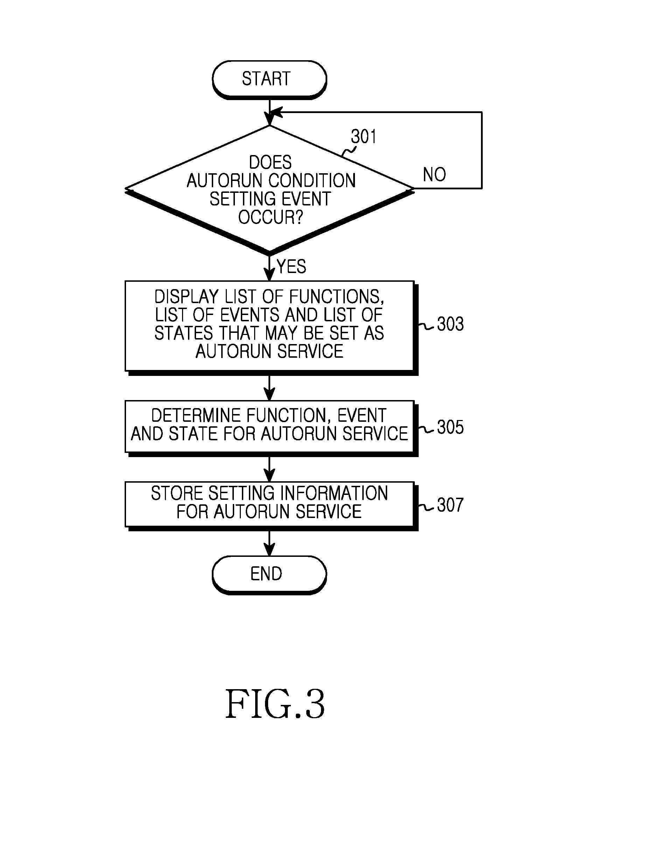

FIG. 3 shows a procedure for generating setting information on an auto-run service by an electronic device according to an embodiment of the present disclosure.

Referring to FIG. 3, the electronic device can determine whether an auto-run condition setting event occurs in step 301. For example, when an auto-run condition setting is in an inactivated state, the electronic device 150 can determine whether an event for activating the auto-run condition setting occurs, based on user-input information provided through the input unit 150. For example, the electronic device can determine whether selecting an auto-run condition setting menu is sensed. As another example, the electronic device can determine whether selecting an auto-run condition setting icon is sensed. As still another example, the electronic device can also determine whether the motion of an electronic device to which an auto-run condition setting event is mapped is sensed.

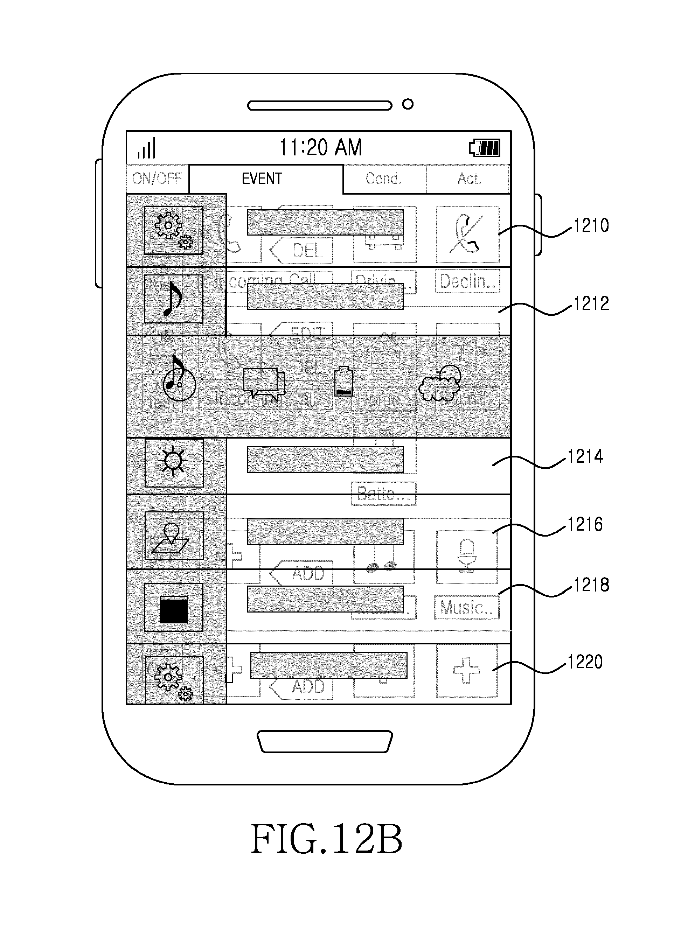

When the auto-run condition setting event occurs, the electronic device can display, on the display unit 140, a list of functions, a list of events and a list of states that can be set as an auto-run service in step 303. For example, the electronic device can display a list of functions such as a hardware setting 1210, a sound setting 1212, a screen setting 1214, a path setting 1216 and a schedule setting 1218 that can be set as an auto-run service, as shown in FIG. 12B.

The electronic device can determine function, event and state information for the auto-run service based on input information sensed through the input unit 150 in step 305. For example, the electronic device can determine, as setting information for the auto-run service, a function, an event and a state selected based on input information sensed through the input unit 150 from the list of functions, the list of events and the list of states that can be set as the auto-run service displayed on the display unit 140.

The electronic device can store setting information for the auto-run service in the data storage unit 111 in step 307.

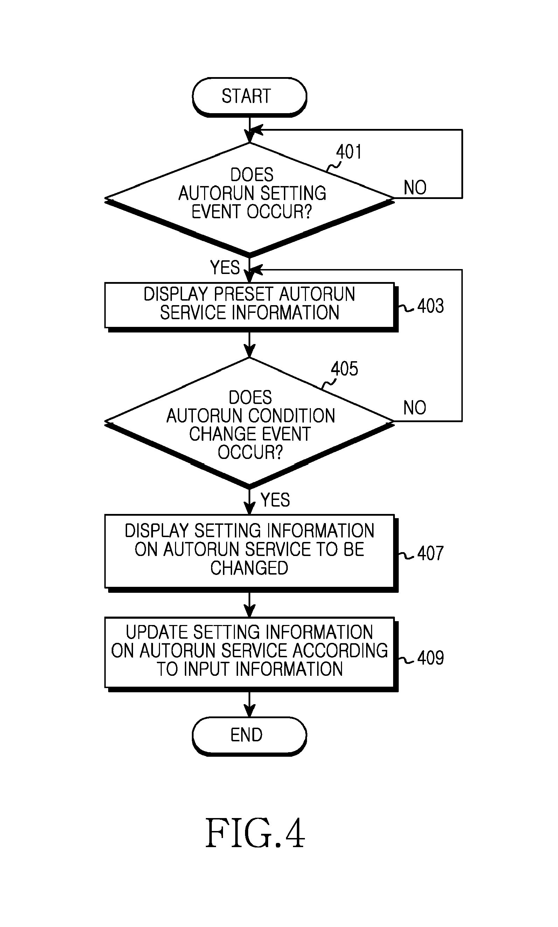

FIG. 4 shows a procedure for updating setting information on an auto-run service by an electronic device according to an embodiment of the present disclosure.

Referring to FIG. 4, the electronic device can determine whether an auto-run condition setting event occurs in step 401. For example, when an auto-run condition setting is in an inactivated state, the electronic device 150 can determine whether an event for activating the auto-run condition setting occurs, based on user-input information provided through the input unit 150. For example, the electronic device can determine whether selecting an auto-run condition setting menu is sensed. As another example, the electronic device can determine whether selecting an auto-run condition setting icon is sensed. As still another example, the electronic device can also determine whether the motion of an electronic device to which an auto-run condition setting event is mapped is sensed.

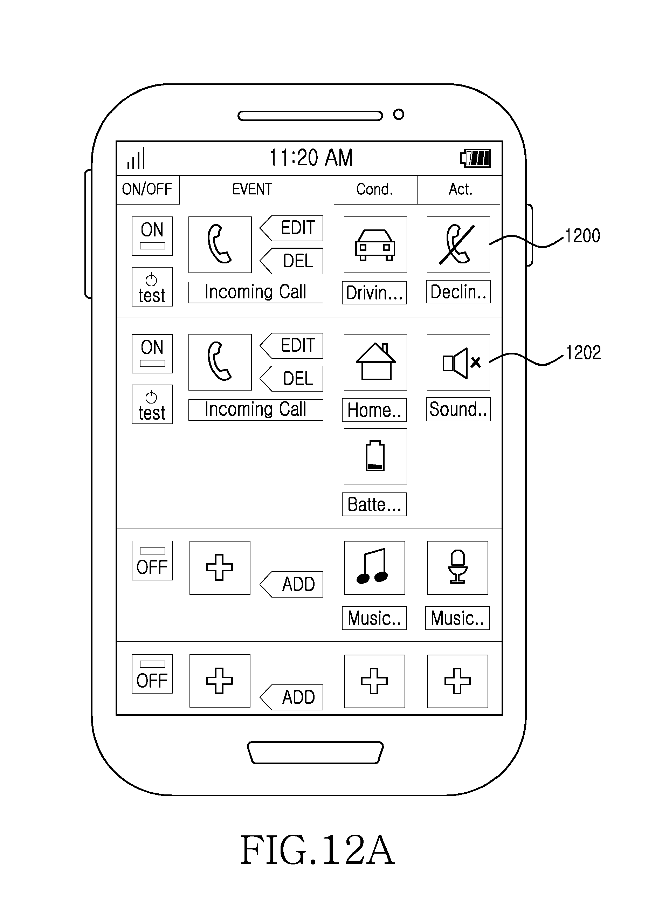

When the auto-run condition setting event occurs, the electronic device can display, on the display unit 140, information on one or more preset auto-run services in step 403.For example, the electronic device can display, on the display unit 140, first auto-run service information that interrupts call reception while driving, and second auto-run service information 1202 that sets a notification mode to a silent mode indoors, as shown in FIG. 12A.

The electronic device can determine whether an auto-run condition change event occurs in step 405. For example, the electronic device can determine whether any one among at least one of preset auto-run service information displayed on the display unit 140 is selected.

When the auto-run condition change event does not occur, the electronic device can continue to display one or more pieces of preset auto-run service information in step 403. If the auto-run condition change event does not occur during a reference time period, the electronic device can end this algorithm.

When the auto-run condition change event occurs, the electronic device 407 can display, on the display unit 140, setting information on an auto-run service for changing an auto-run condition among one or more pieces of preset auto-run service information in step 407. For example, the electronic device can display, on the display unit 140, detailed setting information on the auto-run service information selected in step 405.

The electronic device can update setting information on an auto-run service based on input information sensed through the input unit 150 in step 409. In this case, the electronic device can store updated setting information on the auto-run service in the data storage unit 111.

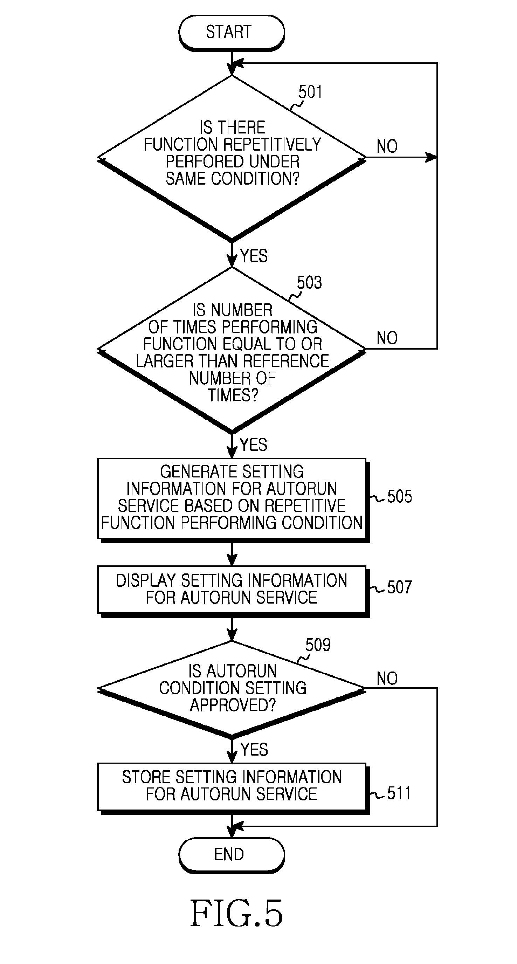

FIG. 5 shows a procedure for automatically generating setting information on an auto-run service by an electronic device according to an embodiment of the present disclosure.

Referring to FIG. 5, the electronic device can determine whether there is a function that is repetitively performed under the same condition in step 501. For example, when a first function is performed, the electronic device can identify state information on the electronic device at the time when the first function is performed. In this case, the electronic device can determine whether the first function is repetitively performed on the electronic device having the same state information.

When there is the function that is repetitively performed under the same condition, the electronic device can determine whether the number of times performing the function repetitively to determine whether to generate setting information on an auto-run service by using the function repetitively performed is equal to or larger than a reference number of times, in step 503.

When the number of times performing the function is smaller than the reference number of times, it can be appreciated that the electronic device does not use the function repetitively performed for generating setting information on the auto-run service. Accordingly, the electronic device can determine whether there is a function that is repetitively performed under the same condition in step 501.

When the number of times performing the function is equal to or larger than the reference number of times, it can be appreciated that the electronic device uses the function repetitively performed for generating setting information on the auto-run service. Accordingly, the electronic device can generate setting information on the auto-run service based on a repetitive function performing condition in step 505. For example, when the notification mode of the electronic device is set to be in a bell mode before a user's home at quitting time, the electronic device can set location information on the electronic device moving to the user's home as event information on the auto-run service and set the quitting time as state information on the auto-run service. Also, the electronic device can set the operation of setting the notification mode to the bell mode, as a function performed through the auto-run service.

When generating setting information on the auto-run service, the electronic device can display, on the display unit 140, setting information on the auto-run service in step 507.

The electronic device can determine whether a user approves setting information on the auto-run service displayed on the display unit 140, based on input information sensed through the input unit 150 in step 509. For example, the electronic device can determine whether selecting an approval menu or an approval icon is sensed, based on input information sensed through the input unit 150.

When the setting information on the auto-run service is not approved, the electronic device ends this algorithm. In this case, the electronic device can also continue to determine whether there is the function that is repetitively performed under the same condition in step 501.

When the setting information on the auto-run service is not approved, the electronic device can store, the setting information on the auto-run service approved by the user, in the data storage unit 111 in step 511.

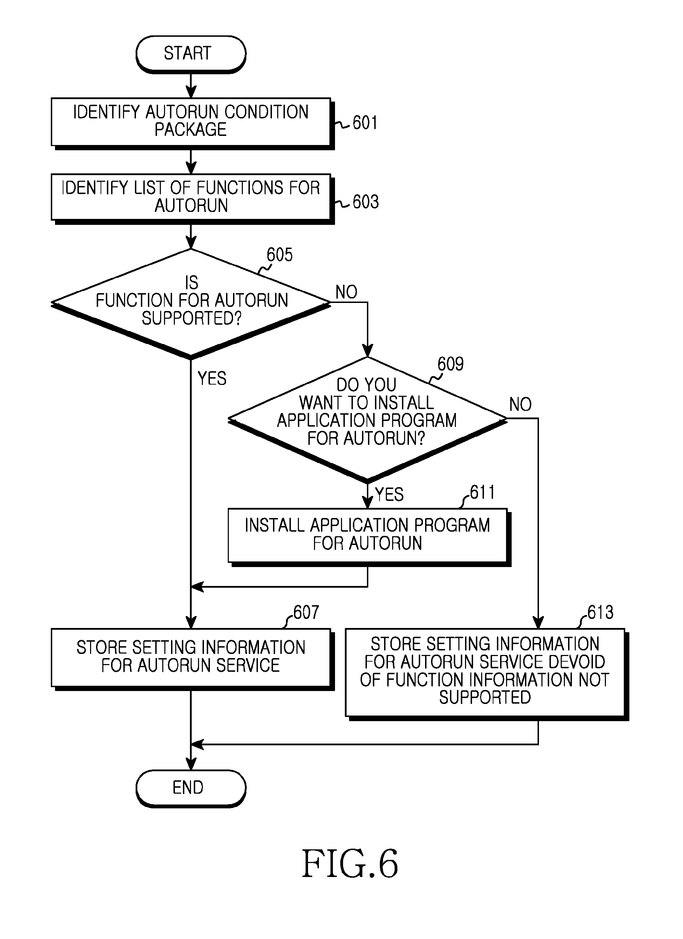

FIG. 6 shows a procedure for generating setting information on an auto-run service by an electronic device according to an embodiment of the present disclosure.

Referring to FIG. 6, the electronic device can identify an auto-run condition package in step 601. For example, when an auto-run condition setting is in an inactivated state, the electronic device can determine whether an event for activating the auto-run condition setting occurs, based on user-input information provided through the input unit 150. If an auto-run condition setting event occurs, the electronic device can transmit a message requesting for the auto-run condition package to a server or an opposite electronic device. The electronic device can identify a plurality of auto-run conditions that are included in the auto-run condition package provided from the server or the opposite electronic device. As another example, when the auto-run condition setting is in an inactivated state, the electronic device can determine whether an event for activating the autorun condition setting occurs, based on user-input information provided through the input unit 150. If the auto-run condition setting event occurs, the electronic device can also identify the plurality of autorun conditions in the auto-run condition package that is provided from the server or the opposite electronic device and stored in the memory 110.

The electronic device can identify a list of executable functions corresponding to the autorun service in step 603.

The electronic device can determine whether it is possible to support functions corresponding to the plurality of auto-run conditions included in the auto-run condition package in step 605.

When it is possible to support functions corresponding to the plurality of auto-run conditions included in the auto-run condition package, the electronic device can store, the auto-run conditions included in the auto-run condition package, as setting information on the auto-run service in step 607.

When it is impossible to support functions corresponding to the plurality of auto-run conditions included in the auto-run condition package, the electronic device can determine whether to install an application program for auto-run in step 609. For example, when it is impossible to support functions corresponding to the plurality of autorun conditions included in the auto-run condition package, the electronic device can display, on the display unit 140, a message inquiring whether to install an application program for an unsupported function. In this case, the electronic device can determine whether a user approves the installation of an application program for the unsupported function, based on input information sensed through the input unit 150. As another example, when it is impossible to support functions corresponding to the plurality of auto-run conditions included in the auto-run condition package, the electronic device can display, on the display unit 140, application program information related to the unsupported function. In this case, the electronic device can determine whether a user approves the installation of an application program displayed on the display unit 140, based on input information sensed through the input unit 150.

When it is determined to install the application program for the auto-run, the electronic device can install the application program related to the function unsupported by the electronic device for the auto-run in step 611.

When the application program related to the function unsupported by the electronic device for the auto-run is installed, the electronic device can store, the auto-run conditions included in the auto-run condition package, as setting information on the auto-run service.

When it is determined not to install the application program for the auto-run, the electronic device can store, one or more auto-run conditions for a function supported by the electronic device among the plurality of auto-run conditions included in the auto-run condition package, as setting information on the auto-run service in step 613.

When it is determined not to install the application program for the auto-run in the above-described embodiment, the electronic device can determine, only some of the auto-run conditions included in the auto-run condition package, as setting information for the auto-run service.

When it is determined not to install the application program for the auto-run in another embodiment, the electronic device can also determine the auto-run conditions included in the auto-run condition package, not to be setting information for the auto-run service.

Although not shown, the electronic device can also add new auto-run conditions to the auto-run condition package based on input information sensed through the input unit 150 and update the auto-run condition package. In this case, the electronic device can also transmit an updated auto-run condition package to a server or another electronic device and share the updated auto-run condition package with them.

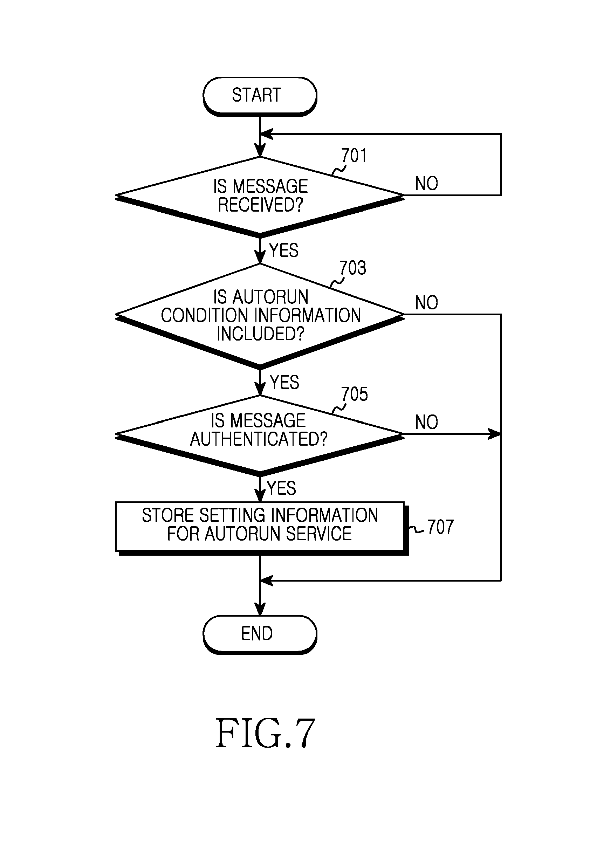

FIG. 7 shows a procedure for generating setting information on an auto-run service by an electronic device according to another embodiment of the present disclosure.

Referring to FIG. 7, the electronic device can determine whether a message is received from an opposite electronic device in step 701.

When the message is received, the electronic device can determine whether the message provided from the opposite electronic device includes auto-run condition information in step 703.

When the message provided from the opposite electronic device does not include autorun condition information, the electronic device can end this algorithm.

When the message provided from the opposite electronic device includes auto-run condition information, the electronic device can authenticate the message in step 705. For example, the electronic device can determine whether it is possible to authenticate the message in consideration of one or both of an authentication certificate and a password included in the structured form of the message.

When it is impossible to authenticate the message, the electronic device can consider the autorun condition included in the message as being unreliable and end this algorithm.

When the message is authenticated, the electronic device can store, the autorun condition included in the message, as setting information on the auto-run service in step 707.

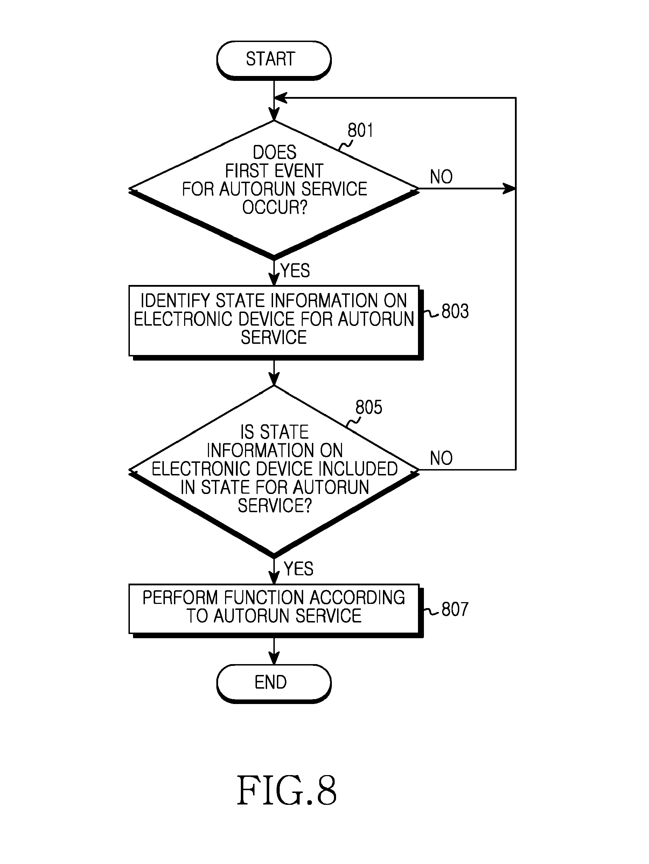

FIG. 8 shows a procedure for providing an auto-run service by an electronic device according to an embodiment of the present disclosure.

Referring to FIG. 8, the electronic device can determine whether a first event for the auto-run service occurs in step 801. For example, the electronic device can determine whether the state change of the electronic device set as run information of event information of the auto-run service is sensed.

When the first event for the auto-run service occurs, the electronic device can identify the current state of the electronic device in step 803.

The electronic device can determine whether the current state of the electronic device is included in state information for the auto-run service in step 805. For example, the electronic device can determine whether the current state of the electronic device is included in a list of reference states for the auto-run service in step 803.

When the current state of the electronic device is not included in state information for the auto-run service, the electronic device can re-identify the current state of the electronic device in step 803. In this case, the electronic device can regularly re-identify the current state of the electronic device.

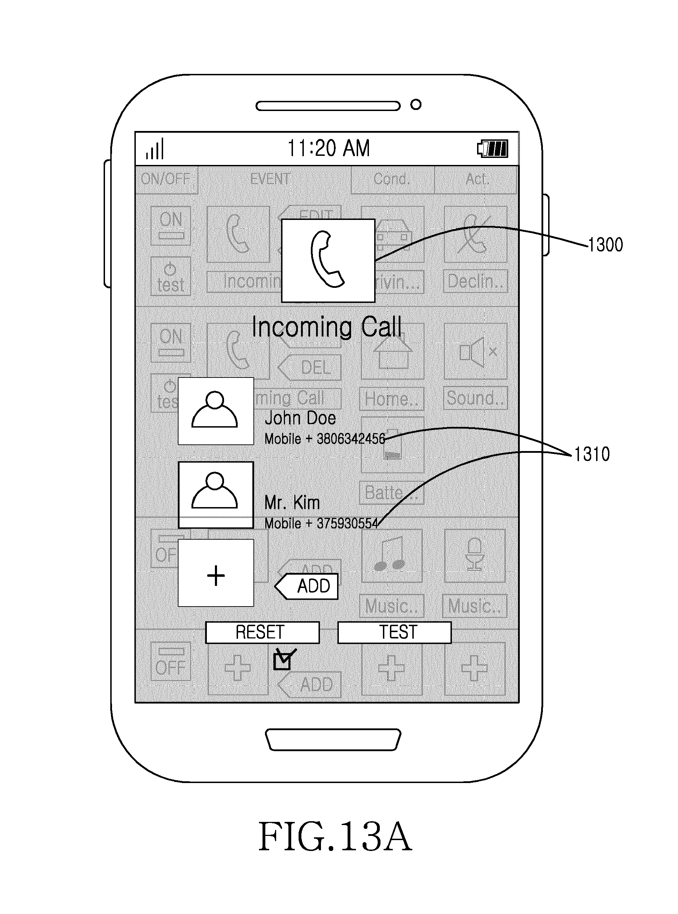

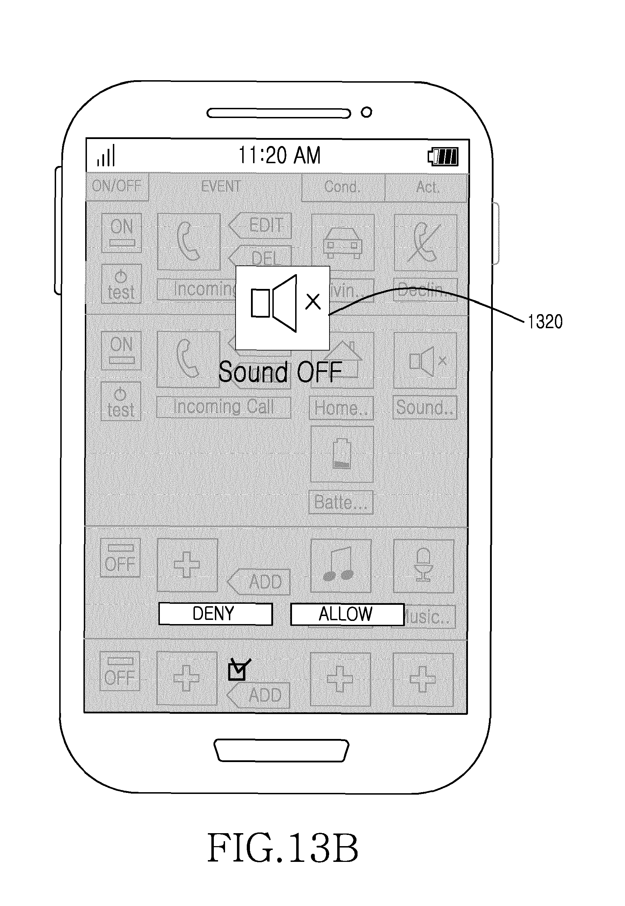

When the current state of the electronic device is included in state information for the auto-run service, the electronic device can perform a function for the auto-run service corresponding to the current state of the electronic device in step 807. For example, when setting information on the auto-run service, such as "set to a silent mode when a call is received at work is stored, the electronic device can identify the current location of the electronic device if an incoming call is received from one or more opposite electronic devices 1310 in operation 1300 as shown in FIG. 13A. If the electronic device is placed in a company, the electronic device can set a notification mode to a silent mode 1320 as shown in FIG. 13B. If the electronic device is not placed in the company when the call is received, the electronic device can regularly identify the location of the electronic device while the call is received.

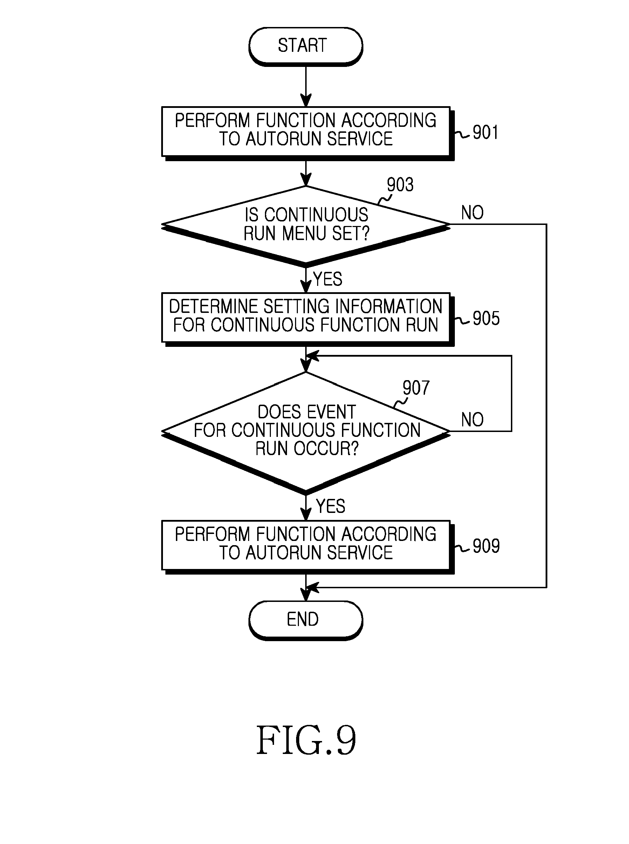

FIG. 9 shows a procedure for further providing an auto-run service by an electronic device according to an embodiment of the present disclosure.

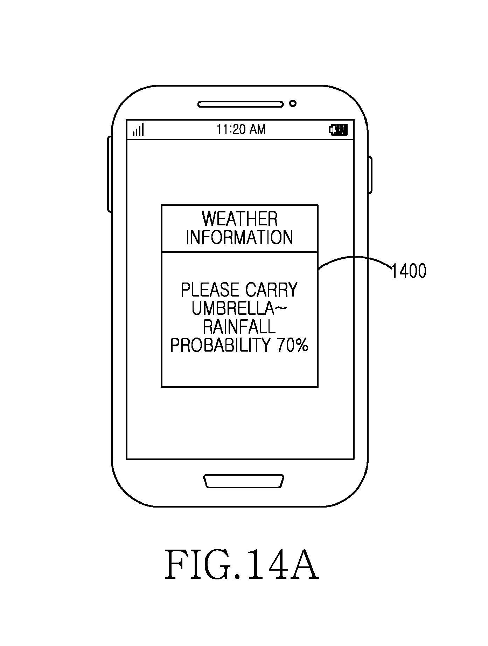

Referring to FIG. 9, the electronic device can perform a function set to the auto-run service based on setting information on the auto-run service in step 901. For example, when setting information for the auto-run service is configured to recommend an umbrella when it is expected to rain at 6 AM, the electronic device can identify the weather at 6 AM. If it is expected to rain, the electronic device can display a message 1400 such as "Please carry an umbrella" on the display unit 140 as shown in FIG. 14A.

When a function set to the auto-run service is performed, the electronic device can determine whether a continuous run menu is set in step 903. If the continuous run menu is not set, the electronic can end this algorithm.

When the continuous run menu is set, the electronic device can determine event information for continuous function run in step 905. For example, the electronic device can store a plurality of conditions for the continuous function run. Accordingly, the electronic device can select one or more conditions related to a function performed through the autorun service in step 901 among the plurality of conditions for the continuous function run and determine determined conditions as setting information for the continuous function run. For example, when an auto-run service for recommending an umbrella is performed in step 901, the electronic device can select the location change of the electronic device related to the "An umbrella is recommended" and determine it as setting information for the continuous function run.

The electronic device can determine whether an event for the continuous function run occurs in step 907. For example, when the "location change" is set as setting information for the continuous function run, the electronic device can determine whether a movement from an indoor location to an outdoor location is sensed.

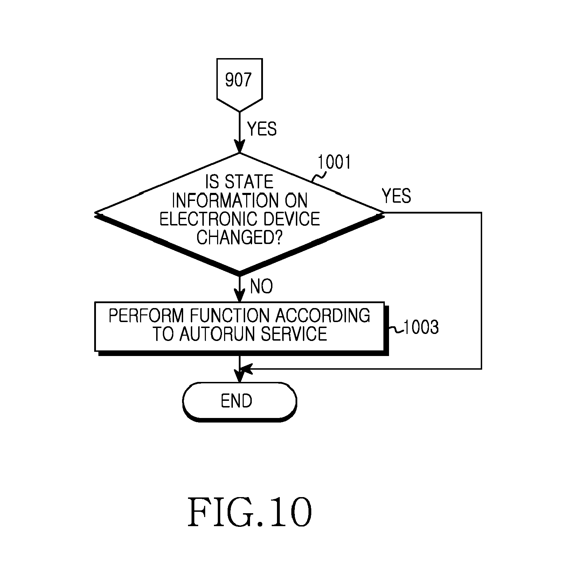

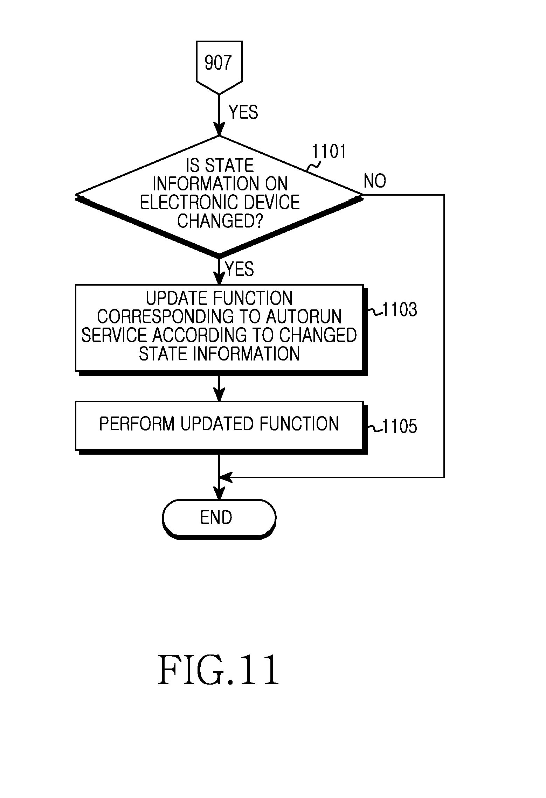

When the event for the continuous function run occurs, the electronic device can perform a function set to the auto-run service in step 909. For example, the electronic device can display, on the display unit, "An umbrella is recommended" information corresponding to an event characteristic for the continuous function run as shown in FIG. 10 or 11.

FIG. 10 shows a detailed procedure for providing an additional auto-run service by an electronic device according to an embodiment of the present disclosure.

Referring to FIG. 10, when an event for the continuous function run occurs in step 907 of FIG. 9, the electronic device can determine whether state information on the electronic device is changed in step 1001. For example, when an auto-run service for recommending an umbrella corresponding to a weather condition provided in step 901, the electronic device can determine whether weather condition has been changed.

When the state information on the electronic device has been changed, the electronic device can end this algorithm without performing a function set to the auto-run service even if the event for the continuous function run occurs.

When the state information on the electronic device has not been changed, the electronic device can perform the function set to the auto-run service based on setting information on the event for the continuous function run in step 1003. For example, when setting information involves a location change for the continuous function run set in step 905, if the electronic device moves from an indoor location to an outdoor location, the electronic device can display, on the display unit 140, a guide message 1400 such as "Please carry an umbrella" as shown in FIG. 14A.

FIG. 11 shows a detailed procedure for providing an additional auto-run service by an electronic device according to another embodiment of the present disclosure.

Referring to FIG. 11, when an event for the continuous function run occurs in step 907 of FIG. 9, the electronic device can determine whether state information on the electronic device is changed in step 1101. For example, when an auto-run service for recommending carrying an umbrella according to weather condition that is provided in step 901, the electronic device can determine whether weather condition is changed.

When the state information on the electronic device has been changed, the electronic device can update a function corresponding to the auto-run service based on changed state information on the electronic device in step 1103. For example, when the autorun service for recommending carrying an umbrella corresponding to weather condition that is the state information on the electronic device is provided in step 901, the electronic device can change a message of "An umbrella is recommended" according to the updated weather condition.

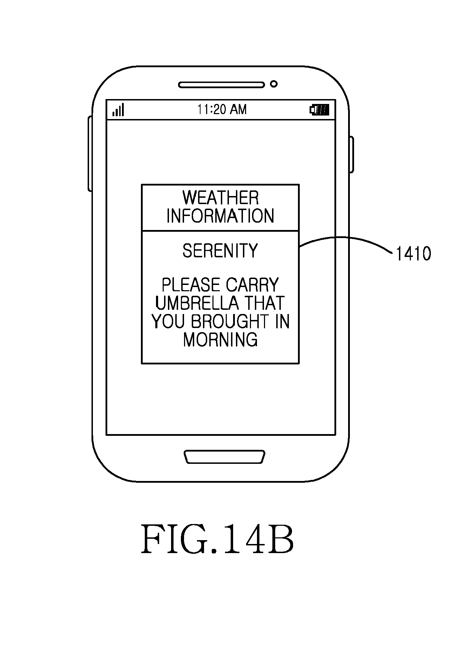

The electronic device can perform a changed function corresponding to an updated auto-run service in step 1105. For example, when a weather change is sensed in step 1101, the electronic device can display, on the display unit 140, a guide message 1410 such as "Please carry an umbrella that you brought in the morning" as shown in FIG. 14B.

When the state information on the electronic device is not changed in step 1101, the electronic device can end this algorithm. When the state information on the electronic device is not changed in another embodiment, the electronic device can also perform a function set to the auto-run service according to setting information on an event for continuous function run.

The methods according to embodiments described in the following claims and/or the specification can be implemented in hardware, software, or a combination thereof.

If the methods are implemented in software, a computer readable storage medium storing one or more programs (software modules) can be provided. The one or more programs stored in the computer readable storage medium are configured to be able to be executed by one or more processors in the electronic device. The one or more programs include instructions that perform the methods according to the embodiments described in the following claims and/or the specification.

Such a program (software module, software) can be stored in a random access memory, a non-volatile memory including a flash memory, a read only memory (ROM), an electrically erasable programmable read only memory (EEPROM), a magnetic disc storage device, a compact disc-ROM (CD-ROM), a digital versatile disc (DVD), other types of optical storage devices, or a magnetic cassette. Alternatively, such programs can be stored in memories including combinations of some or all of these memories. Also, each memory can also be in plural forms.

Also, such a program may be stored in an attachable storage device that may access the electronic device through a communication network such as an internet, an intranet, a local area network (LAN), a wide LAN (WLAN), or a storage area network (SAN), or a communication network including combinations thereof. Such a storage device may access the electronic device through an external port.

Also, a separate storage device on the communication network may access a portable electronic device.

As described above, the electronic device may automatically generate additional setting information on the auto-run service based on setting information on a preset auto-run service and thus provide a user with various auto-run services corresponding to a user environment.

While particular embodiments have been described in the detailed description of the present disclosure, the operations of the electronic device may be changed in order, integrated or re-used and several variations such as leaving out an operation may be made without departing from the scope of the present disclosure. Therefore, the scope of the present disclosure should not be limited to the above-described embodiments but be defined by the following claims and equivalents thereof.

## Claims

1. A method in an electronic device, the method comprising:
detecting state information in the electronic device;
performing a first function mapped to the detected state information;
generating an event characteristic for the first function; and
re-performing the first function when an event corresponding to the generated event characteristic is occurred.

2. The method of claim 1, wherein the state information of the electronic device comprises one or more of motion information, location information, weather information, information on an access of the electronic device to a communication network, and signal reception information on the electronic device.

3. The method of claim 1, wherein the first function comprises one or more of the setting of the control function of the electronic device, the execution of an application program and the display of state information.

4. The method of claim 1, wherein the performing of the first function comprises:
performing the first function mapped to the identified state information when the identified state information is included in a list of reference states,
wherein the list of reference states includes one or more pieces of state information on the electronic device to which one or more functions are mapped, the functions being performed through an auto-run service.

5. The method of claim 1, further comprising:
determining whether an auto-run service condition setting event occurs, based on input information before detecting the state information of the electronic device; and
determining one or more of an event characteristic for an auto-run service, the state information of the electronic device, and a function to be automatically performed based on input information when the auto-run service condition setting event is occurred.

6. The method of claim 1, further comprising:
determining whether an auto-run service condition setting event occurs, based on input information before identifying the state information of the electronic device; and
identifying one or more auto-run conditions in a function performing package provided from a server or an opposite electronic device when the auto-run service condition setting event is occurred,
wherein the auto-run conditions includes one or more of an event characteristic for each auto-run service, the state information of the electronic device and a function to be automatically performed.

7. The method of claim 6, further comprising:
determining whether there is one or more auto-run conditions not supported among the auto-run conditions after identifying the auto-run conditions;
determining whether to install an application program for the one or more auto-run conditions when there is the one or more auto-run conditions not supported; and
installing one or more application programs for the one or more auto-run conditions when it is determined to install an application program for the one or more auto-run conditions.

8. The method of claim 7, wherein the determining of whether to install the application program comprises:
displaying a message for determining whether to install an application program for the one or more auto-run conditions when there is the one or more auto-run conditions not supported; and
determining whether to install an application program for the one or more auto-run conditions based on input information on the message.

9. The method of claim 7, wherein the determining of whether to install the application program comprises:
displaying application program information for the one or more auto-run conditions when there is the one or more auto-run conditions not supported; and
determining whether to install each application program based on input program.

10. The method of claim 1, wherein the re-performing of the first function comprises:
re-identifying the state information on the electronic device when an event occurs according to the event characteristic; and
re-performing the first function when identified state information on the electronic device is the same as re-identified state information on the electronic device.

11. The method of claim 10, further comprising:
updating the first function based on the re-identified state information on the electronic device when the identified state information on the electronic device is different from the re-identified state information on the electronic device; and
performing the first function updated.

12. An electronic device comprising:
a memory; and
a processor configured to:
detect state information of the electronic device;
perform a first function mapped to the detected state information;
generate an event characteristic for the first function; and
re-perform the first function when an event corresponding to the generated event characteristic is occurred.

13. The electronic device of claim 12, wherein the processor is configured to determine one or more of an event characteristic for an auto-run service, the state information on the electronic device and a function to be automatically performed based on input information when an auto-run service condition setting event based on the input information is occurred.

14. The electronic device of claim 12, further comprising a communication unit,
wherein the processor is configured to identify one or more auto-run conditions in a function performing package provided from a server or an opposite electronic device through the communication unit, when an auto-run service setting event based on input information occurs,
wherein the auto-run conditions include one or more of an event characteristic for each auto-run service, the state information on the electronic device and a function to be automatically performed.

15. The electronic device of claim 14, wherein the processor is configured to:
determine an application program for the one or more auto-run conditions when there is one or more auto-run conditions not supported among the auto-run conditions; and install one or more application programs for the one or more auto-run conditions when it is determined to install the application program for the one or more auto-run conditions.
